# EUROPÄISCHE PATENTSCHRIFT

(11) **EP 3 298 306 B1**
(45) Veröffentlichungstag und Bekanntmachung des Hinweises auf die Patenterteilung: **11.12.2019**
(21) Anmeldenummer: 16723114.1
(22) Anmeldetag: 17.05.2016
(51) Int. Cl.: F16H 61/00, F16H 61/12, F16H 57/04

(54) **VERFAHREN ZUM BETREIBEN EINER ELEKTRISCH ANSTEUERBAREN FÖRDERPUMPE IN EINEM HYDRAULIKKREIS**
METHOD FOR OPERATING AN ELECTRICALLY ACTUABLE FEED PUMP IN A HYDRAULIC CIRCUIT
PROCÉDÉ PERMETTANT DE FAIRE FONCTIONNER UNE POMPE D'ALIMENTATION À COMMANDE ÉLECTRIQUE DANS UN CIRCUIT HYDRAULIQUE

(30) Priorität: 21.05.2015 DE 102015006609
(43) Veröffentlichungstag der Anmeldung: 28.03.2018
(73) Patentinhaber: Audi AG, 85045 Ingolstadt (DE)
(72) Erfinder: AMMLER, Stefan, 86673 Bergheim (DE)
(86) Internationale Anmeldenummer: PCT/EP2016/061006
(87) Internationale Veröffentlichungsnummer: WO 2016/184846

(56) Entgegenhaltungen:
- WO-A1-2015/046075
- DE-A1-102011 100 836
- US-A1- 2011 129 356
- US-A1- 2011 224 879
- US-A1- 2013 118 593

## Beschreibung

Die Erfindung betrifft ein Verfahren zum Betreiben einer über einen Elektromotor ansteuerbaren Förderpumpe in einem Hydraulikkreis nach dem Oberbegriff des Patentanspruches 1.

Ein solcher Hydraulikkreis ist beispielhaft für das Hydrauliksystem in einem Doppelkupplungsgetriebes eines Kraftfahrzeuges anwendbar, bei dem mittels zweier Teilgetriebe ein vollautomatischer Gangwechsel ohne Zugkraftunterbrechung ermöglicht ist. Die Übertragung des Antriebsmomentes erfolgt über eine von zwei Kupplungen, die die zwei Teilgetriebe mit dem Antrieb verbinden. Die Kupplungen sowie die Aktuatoren zum Einlegen der Gänge sind hydraulisch über das Hydrauliksystem ansteuerbar. Hierzu ist zumindest eine Förderpumpe vorgesehen, die bei einer Hydrauliköl-Normalversorgung das Hydrauliköl aus einem Ölsumpf ansaugt, in den das im Hydrauliksystem umgewälzte Hydrauliköl auch wieder rückführbar ist, unter Bildung eines geschlossenen Hydraulikkreislaufes.

Aus der DE 10 2011 100 836 A1 ist ein solches gattungsgemäßes Hydrauliksystem bekannt, das den Ausgangspunkt der vorliegenden Erfindung bildet. Der Elektromotor der Förderpumpe des Hydrauliksystems ist in einem Regelkreis eingebunden, der eine Regeleinheit aufweist. Diese steuert auf der Grundlage einer sensorisch erfassten Ist-Drehzahl und einer Soll-Drehzahl den Elektromotor mit einer Stell-Drehzahl an. Bei einer solchen Drehzahlregelung der Förderpumpe wird also in gängiger Praxis sowohl die Ist-Stromaufnahme des Förderpumpen-Elektromotors als auch die Ist-Drehzahl der Förderpumpe sensorisch erfasst.

Im Stand der Technik wird üblicherweise nicht erfasst, ob im Hydraulikkreis eine Fluid-Unterversorgung vorliegt, die gegebenenfalls zu einem Getriebeschaden führen kann. Als Maßnahme zur Erkennung einer Fluid-Unterversorgung bietet sich die Anordnung eines Füllstandsensors im Hydrauliköl-Sumpf an. Dies ist jedoch nicht nur kostspielig und bauteilaufwendig. Vielmehr kann der Füllstandsensor im Betrieb gegebenenfalls auch störanfällig sein.

Die Aufgabe der Erfindung besteht darin, ein Verfahren zum Betreiben einer über einen Elektromotor ansteuerbaren Förderpumpe in einem Hydraulikkreis bereitzustellen, bei dem eine Fluid-Unterversorgung im Hydraulikkreis betriebssicher sowie in einfacher Weise verhindert wird.

Die Aufgabe ist durch die Merkmale des Patentanspruches 1 gelöst. Bevorzugte Weiterbildungen der Erfindung sind in den Unteransprüchen offenbart.

Die Erfindung beruht allgemein auf dem Sachverhalt, dass bei einer Drehzahlregelung der Förderpumpe sowohl die Ist-Stromaufnahme des Förderpumpen-Elektromotors als auch die Ist-Drehzahl der Förderpumpe sensorisch erfasst werden. Vor diesem Hintergrund ist gemäß dem kennzeichnenden Teil des Patentanspruches 1 der Regeleinheit eine Auswerteeinheit zur Erkennung der Fluid-Unterversorgung zugeordnet. In der Auswerteeinheit wird die Ist-Drehzahl der Förderpumpe mit einer Referenzdrehzahl (das heißt einer später definierten maximalen Normalversorgungs-Drehzahl) verglichen, und zwar bei jeweils identischer, damit korrelierender Stromaufnahme. Aus dem Vergleich ermittelt die Auswerteinheit, ob die Fluid-Unterversorgung vorliegt oder nicht. Die Fluid-Unterversorgung ist somit signaltechnisch einfach sowie ohne Zusatzbauteile (zum Beispiel einen Füllstandsensor) betriebssicher ermittelbar.

Bei Erkennung einer solchen Fluid-Unterversorgung kann die Auswerteeinheit eine Warnmeldung generieren. Bei Vorliegen zumindest einer oder mehrerer solcher Warnmeldungen kann eine entsprechende Anzeige im Fahrzeuginnenraum erfolgen, so dass der Fahrzeugnutzer das Fahrzeug noch vor Eintreten eines Getriebeschadens zur Werkstatt bringen kann. Die Prüfung, ob oder ob nicht eine solche Fluid-Unterversorgung vorliegt, ist zeitlich frei konfigurierbar. Beispielhaft kann die Prüfung nach einer vorgegebenen Laufleistung, etwa alle 1000 Kilometer oder alle 500 Kilometer, oder bei bestimmten Fluidtemperaturen im Fahrzeugbetrieb erfolgen.

Bei der Erfassung der Ist-Drehzahl zur Prüfung auf Fluid-Unterversorgung ist sicherzustellen, dass das Fluid im Hydraulikkreis unter Bildung eines ausreichend großen Ist-Füllstands in den Fluidsumpf rückgeflossen ist. Für eine sensorfreie Ermittlung des Prüf-Füllstands kann die Auswerteeinheit eine Füllstandmodelleinheit aufweisen. Diese erfasst sämtliche, den Ist-Füllstand im Fluidsumpf beeinflussende Ereignisse, zum Beispiel eine Fahrzeug-Abstellzeitdauer (zur Initialisierung der Füllstandmodelleinheit), eine Fluid-Betriebstemperatur, eine Entnahme durch die Förderpumpe oder dergleichen. In Abhängigkeit davon wird in der Füllstandeinheit ein zeitlicher Modell-Füllstandverlauf ermittelt, der den zeitlichen Ist-Füllstandverlauf im Fluidsumpf nachbildet. Mit dem zeitlichen Modell-Füllstandverlauf kann ein Füllstand prognostiziert werden, der sich bei einem leckagefreien sowie fehlerfrei arbeitenden Hydrauliksystem ergeben würde.

Im Hinblick auf ein aussagekräftiges Prüfergebnis kann die Prüfung auf Fluid-Unterversorgung erst bei Erfüllung einer Prüfbedingung durchgeführt wird, wonach der oben genannte zeitliche Modell-Füllstandverlauf größer oder gleich einem vordefinierten Prüf-Füllstand sein muss. Bei Erreichen/Überschreiten des Prüf-Füllstands im Modell-Füllstandverlauf ist ein ausreichender Füllstand prognostiziert, der einen aussagekräftigen Vergleich zwischen der Ist-Drehzahl und einer Referenz-Drehzahl zulässt. Sofern bei dieser Drehzahl-Betrachtung die Ist-Drehzahl beträchtlich größer als die Referenz-Drehzahl ist, wird gefolgert, dass die Förderpumpe nicht nur Fluid, sondern zusätzlich oder ausschließlich auch einen Luftanteil ansaugt. Das heißt die Ist-Drehzahl würde in diesem Fall wesentlich größer sein als die Referenz-Drehzahl, die sich in etwa ergeben würde, wenn die Förderpumpe ausschließlich Hydraulikfluid (das heißt ohne Luftansaugung) ansaugen würde.

Die Auswerteeinheit ist ein Programmbaustein, der Bestandteil einer Regeleinrichtung des Hydrauliksystems sein kann. Eine besonders einfache signaltechnische Ausführungsvariante der Auswerteeinheit ergibt sich, wenn der Elektromotor der Förderpumpe als Überlastschutz eine Strombegrenzung aufweist. Mittels der Strombegrenzung ist eine Ist-Stromaufnahme des Elektromotors auf eine maximale Stromaufnahme begrenzt.

Bei der obigen Auswerteeinheit kann zur Prüfung auf Fluid-Unterversorgung der folgende Sachverhalt genutzt werden: So stellt sich bei einer Fluid-Normalversorgung ohne Luftansaugung sowie bei maximaler Elektromotor-Stromaufnahme eine maximale Normalversorgungs-Drehzahl ein. Demgegenüber stellt sich bei einer Fluid-Unterversorgung mit zumindest teilweiser Luftansaugung sowie bei maximaler Elektromotor-Stromaufnahme eine Ist-Drehzahl ein, die größer ist als die oben definierte maximale Normalversorgungs-Drehzahl.

Vor diesem Hintergrund wird die Prüfung auf Fluid-Unterversorgung wie folgt durchgeführt: So wird in einem ersten Prozessschritt zunächst ermittelt, ob ein ausreichend großer Fluidfüllstand im Fluidsumpf vorhanden ist. Die Ermittlung erfolgt wie oben erwähnt mittels der Füllstandmodelleinheit.

Ist die obige Prüfbedingung erfüllt, wird in einem zweiten Prozessschritt der Elektromotor mit der maximalen Stromaufnahme beaufschlagt. Hierfür wird die Soll-Drehzahl auf eine stark überhöhte Prüf-Drehzahl gesetzt. Diese ist wesentlich größer als eine Drehzahl, die von dem Regelkreis bei maximaler Stromaufnahme darstellbar ist. Dadurch stellt sich im Elektromotor eine Ist-Drehzahl ein. Diese wird in einer Vergleichereinheit der Auswerteeinheit mit der, mit der maximalen Stromaufnahme korrelierenden maximalen Normalversorgungs-Drehzahl verglichen. Bei Vorliegen einer Ist-Drehzahl, die größer als die maximale Normalversorgungs-Drehzahl ist, erkennt die Auswerteeinheit eine Fluid-Unterversorgung.

Für einen aussagekräftigen Vergleich zwischen der Ist-Drehzahl und der maximalen Normalversorgungs-Drehzahl kann bevorzugt der Vergleichereinheit eine Drehzahlkonstanz-Einheit zugeordnet sein. Mittels der Drehzahlkonstanz-Einheit wird erfasst, ob der Elektromotor bei konstanter Ist-Drehzahl läuft. Erst bei Vorliegen einer solchen konstanten Ist-Drehzahl wird in der Vergleichereinheit der Vergleich zwischen der Ist-Drehzahl und der maximalen Normalversorgungs-Drehzahl durchgeführt. Bevorzugt wird die sich bei einer Fluid-Normalversorgung ohne Luftansaugung sowie bei maximaler Elektromotor-Stromaufnahme einstellende maximale Normalversorgungs-Drehzahl empirisch ermittelt. Die maximale Stromaufnahme und die damit korrelierende maximale Normalversorgungs-Drehzahl können dabei als ein Wertepaar in der Auswerteeinheit hinterlegt sein. Für eine hinreichend genaue Erkennung der Fluid-Unterversorgung ist es bevorzugt, wenn mehrere solcher Wertepaare hinterlegt sind, die jeweils unterschiedlichen Betriebstemperaturen zugeordnet sind.

Die vorstehend erläuterten und/oder in den Unteransprüchen wiedergegebenen vorteilhaften Aus- und/oder Weiterbildungen der Erfindung können - außer zum Beispiel in den Fällen eindeutiger Abhängigkeiten oder unvereinbarer Alternativen - einzeln oder aber auch in beliebiger Kombination miteinander zur Anwendung kommen.

Die Erfindung und ihre vorteilhaften Aus- und Weiterbildungen sowie deren Vorteile werden nachfolgend anhand von Zeichnungen näher erläutert.

Es zeigen:
- Fig. 1: ein teilweises Blockschaltbild eines Hydrauliksystems eines Doppelkupplungsgetriebes eines Kraftfahrzeugs; und
- Fig. 2: eine grundsätzliche Systemarchitektur der Auswerteeinheit zur Erkennung einer Fluid-Unterversorgung.

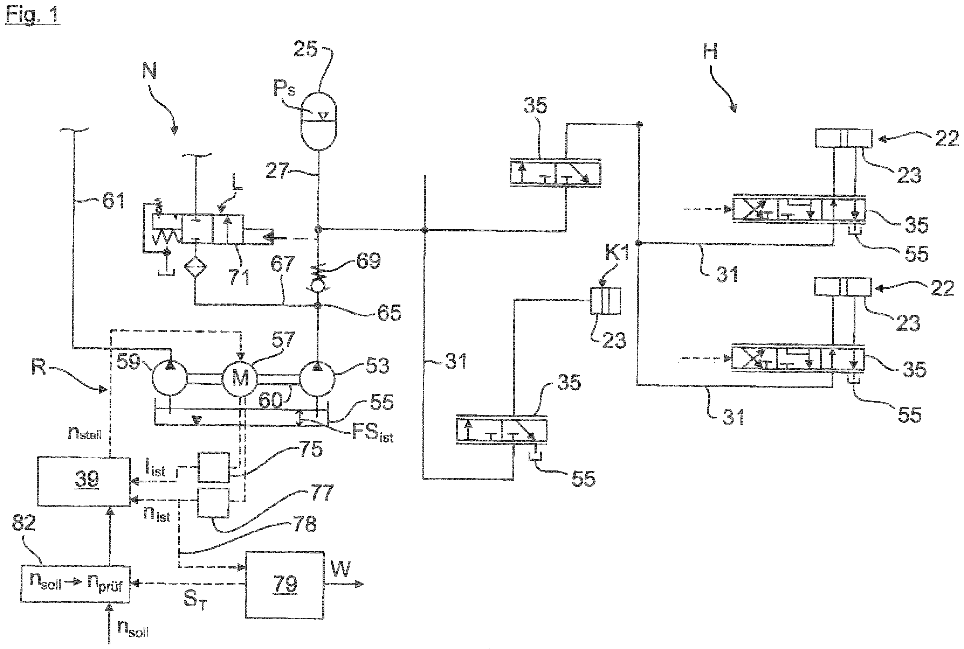

In der Fig. 1 ist in einem stark vereinfachten Blockschaltbild ein Hydrauliksystem eines Doppelkupplungsgetriebes eines Kraftfahrzeuges dargestellt. Mit Hilfe des Hydrauliksystems werden exemplarisch der Hydraulikzylinder 23 der Kupplung K1 sowie die Hydraulikzylinder 23 der Aktuatoren 22 betätigt. Die Aktuatoren 22 sind beispielhaft Doppelsynchronkupplungen, mit deren Hilfe Gangschaltungen im Doppelkupplungsgetriebe erfolgen. Das Hydrauliksystem weist in der Fig. 1 einen Hochdruckkreislauf H sowie einen Niederdruckkreislauf N auf. Im Hochdruckkreis H können die darin geschalteten Hydraulikzylinder 23 der Trennkupplungen (lediglich die Kupplung K1 ist in der Fig. 1 gezeigt) sowie der Aktuatoren 22 über einen Druckspeicher 25 mit einem Speicherdruck p_{S} beaufschlagt werden. Hierzu ist eine am Druckspeicher 25 angeschlossene Hauptleitung 27 über nicht näher beschriebene Teilleitungen 31 zu den Hydraulikzylindern 23 geführt. In den Teilleitungen 31 sind jeweils Steuerventile 35 angeordnet, die über eine zentrale Regeleinrichtung 39 ansteuerbar sind. Das in der Fig. 1 gezeigte Hydrauliksystem ist nur insoweit beschrieben, als es für das Verständnis der Erfindung erforderlich ist. So weist das Hydrauliksystem eine Lade-Hydraulikpumpe 53 auf, die saugseitig mit einem Ölsumpf 55 verbunden ist. Die Lade-Hydraulikpumpe 53 ist zum Aufladen des Druckspeichers 25 über einen Elektromotor 57 von der Regeleinheit 39 ansteuerbar. Zudem ist die Lade-Hydraulikpumpe 53 zusammen mit einer Kühl-Hydraulikpumpe 59 auf einer gemeinsamen Antriebswelle 60 angeordnet, die vom Elektromotor 57 antreibbar ist. Die Kühl-Hydraulikpumpe 59 ist saugseitig ebenfalls mit dem Ölsumpf 55 verbunden und druckseitig mit einer Niederdruckleitung 61 des Niederdruckkreislaufes N verbunden.

Wie aus der Fig. 1 weiter hervorgeht, sind die in dem jeweiligen Hydraulikkreis N, H geschalteten Komponenten jeweils mit Rücklaufleitungen mit dem Ölsumpf 55 strömungstechnisch in Verbindung, wodurch das im Hydraulikkreis N, H umgewälzte Hydrauliköl wieder in den Ölsumpf 55 zurückläuft und sich dort unter Bildung eines Ist-Füllstands FSᵢₛₜ sammelt.

Die Motoransteuerung erfolgt in der Fig. 1 mittels eines Drehzahlregelkreises R, in dem neben der Regeleinheit 39 eine Strommesseinrichtung 75, die eine Ist-Stromaufnahme Iᵢₛₜ des Elektromotors 57 erfasst, und ein Drehzahlsensor 77 integriert ist, der eine Ist-Drehzahl nᵢₛₜ des Elektromotors 57 erfasst. An der Eingangsseite der Regeleinheit 39 liegt eine Soll-Drehzahl nₛₒₗₗ an, die zusammen mit der Ist-Stromaufnahme lᵢₛₜ und der Ist-Drehzahl nᵢₛₜ Grundlage zur Ermittlung einer Stell-Drehzahl nₛₜₑₗₗ bildet, mittels der die Regeleinheit 39 den Elektromotor 57 ansteuert.

Der Elektromotor 57 der Förderpumpen 53, 59 weist in gängiger Praxis als Überlastschutz eine Strombegrenzung auf, mit der die Ist-Stromaufnahme lᵢₛₜ des Elektromotors 57 auf eine maximale Stromaufnahme Iₘₐₓ begrenzt ist.

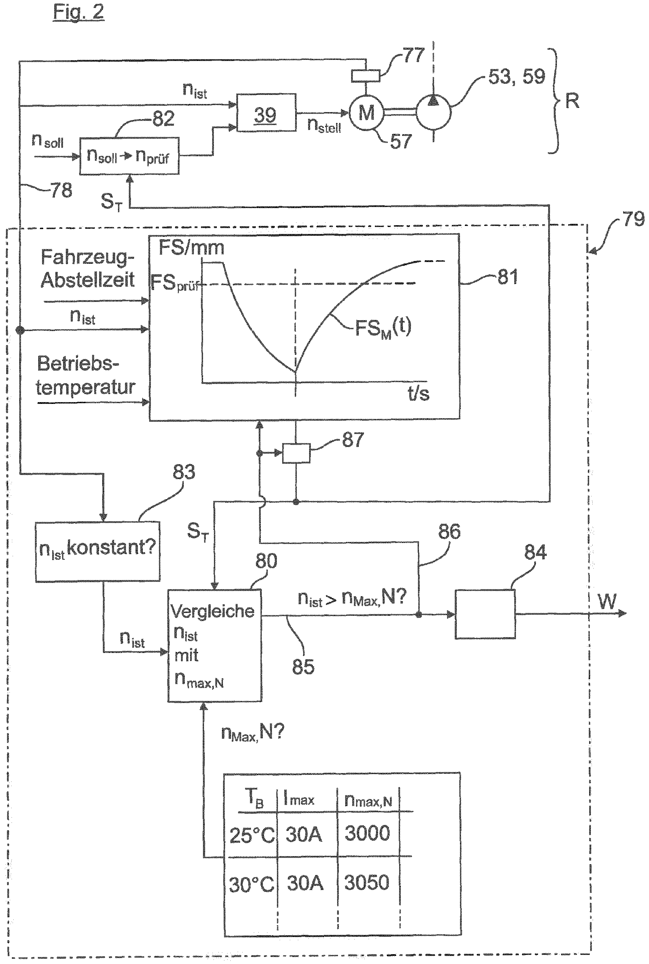

Wie aus der Fig. 1 weiter hervorgeht, ist der Regelkreis R über eine Signalleitung 78 signaltechnisch mit einer Auswerteeinheit 79 in Verbindung, mittels der eine Öl-Unterversorgung im Hydraulikkreis N, H erkennbar ist. Bei Vorliegen einer solchen Öl-Unterversorgung generiert die Auswerteeinheit 79 in einem Signalerzeugungs-Baustein 84 (Fig. 2) eine Warnmeldung W, mittels der eine Öl-Unterversorgung anzeigbar ist.

Die später beschriebene Auswerteeinheit 79 zur Prüfung auf Öl-Unterversorgung nutzt dabei den folgenden Sachverhalt: So stellt sich bei einer Fluid-Normalversorgung ohne Luftansaugung sowie bei maximaler Elektromotor-Stromaufnahme lₘₐₓ eine maximale Normalversorgungs-Drehzahl n_{max,N} ein. Demgegenüber stellt sich bei einer Fluid-Unterversorgung mit zumindest teilweiser Luftansaugung sowie bei maximaler Elektromotor-Stromaufnahme lₘₐₓ eine Drehzahl nᵢₛₜ ein, die größer ist als die maximale Normalversorgungs-Drehzahl n_{max,N}.

Die grundsätzliche Programm-Architektur sowie die Funktionsweise der Auswerteeinheit 79 sind in der Fig. 2 angedeutet. Demzufolge weist die Auswerteeinheit 79 eine Füllstandmodelleinheit 81 auf, die Ereignisse erfasst, die den Ist-Füllstand FSᵢₛₜ im Ölsumpf 55 beeinflussen, etwa eine Fahrzeug-Abstellzeitdauer oder eine Betriebstemperatur. Die Füllstandmodelleinheit 81 ermittelt in Abhängigkeit von diesen Ereignissen einen zeitlichen Modell-Füllstandverlauf FSₘ(t), der den zeitlichen Ist-Füllstandverlauf FSᵢₛₜ(t) im Ölsumpf 55 nachbildet.

Um ein aussagekräftiges Prüfergebnis zu erhalten, wird die eigentliche Prüfung auf Öl-Unterversorgung erst bei Erfüllung einer Prüfbedingung durchgeführt, wonach der zeitlichen Modell-Füllstandverlauf FSₘ(t) größer oder gleich einem vordefinierten Prüf-Füllstand FS_{prüf} sein muss. Der Prüfung auf Öl-Unterversorgung kann zudem eine weitere Prüfbedingung zugeordnet sein, wonach eine vorgegebene Fahrleistung, zum Beispiel 500km, erfolgt sein muss. Hierfür kann in der Auswerteeinheit eine entsprechend ausgelegte Verzögerungseinheit integriert sein. Sind diese Prüfbedingung erfüllt, so werden in einem folgenden Prozessschritt eine Vergleichereinheit 80 und ein Programmbaustein 82 mit einem Triggersignal S_{T} angesteuert.

In dem Programm-Baustein 82 wird daraufhin die Soll-Drehzahl nₛₒₗₗ auf eine stark überhöhte Prüf-Drehzahl n_{prüf} gesetzt, die wesentlich größer ist als eine Drehzahl, die von dem Regelkreis R bei maximaler Stromaufnahme lₘₐₓ darstellbar ist. Dadurch wird sichergestellt, dass der Elektromotor 57 bei der Prüfung auf Öl-Unterversorgung mit maximaler Stromaufnahme Iₘₐₓ läuft.

Zudem wird bei Vorliegen des Triggersignals S_{T} in der Vergleichereinheit 80 die sich einstellende Ist-Drehzahl nᵢₛₜ mit einer maximalen Normalversorgungs-Drehzahl n_{max,N} verglichen. Der Vergleichereinheit 80 ist eine Drehzahlkonstanz-Einheit 83 zugeordnet, mittels der erfasst wird, ob der Elektromotor 57 bei konstanter Ist-Drehzahl nᵢₛₜ läuft. Erst bei Vorliegen einer Drehzahlkonstanz wird in der Vergleichereinheit 80 der obige Vergleich durchgeführt.

Die sich bei einer Fluid-Normalversorgung ohne Luftansaugung sowie bei maximaler Elektromotor-Stromaufnahme lₘₐₓ einstellende maximale Normalversorgungs-Drehzahl n_{max,N} ist empirisch ermittelt und zusammen mit der maximalen Stromaufnahme lₘₐₓ als ein Wertepaar in der Auswerteeinheit 79 hinterlegt. Wie aus der Fig. 2 hervorgeht, sind in der Auswerteeinheit 79 mehrere solcher Wertepaare hinterlegt, die jeweils unterschiedlichen Betriebstemperaturen T_{B} zugeordnet sind. Auf diese Weise ist die in der Vergleichereinheit 80 als Referenz-Drehzahl erforderliche maximale Normalversorgungs-Drehzahl n_{max,N} durch Interpolation in einem Kennfeld ermittelbar, welches über der Fluid-Temperatur und dem Ist-Strom dargestellt sein kann.

Bei Vorliegen einer Ist-Drehzahl nᵢₛₜ, die größer ist als die maximale Normalversorgungs-Drehzahl n_{max,N}, wird in der Vergleichereinheit 80 auf eine Öl-Unterversorgung erkannt. In diesem Fall generiert der Signalerzeugungs-Baustein 84 die Warnmeldung W, mittels der die Öl-Unterversorgung anzeigbar ist.

In der Fig. 2 ist die Vergleichereinheit 80 mit einer Signalleitung 85 mit dem Signalerzeugungs-Baustein 84 verbunden. Von der Signalleitung 85 zweigt eine Rückführleitung 86 zur Füllstandmodelleinheit 81 und zum Verzögerungsbaustein 87 ab.

Nach erfolgter Prüfung auf Öl-Unterversorgung wird über die Rückführleitung 86 und die Füllstandmodelleinheit 81 im Programmbaustein 82 die Drehzahlanforderung wieder von der Prüf-Drehzahl n_{prüf} auf die Soll-Drehzahl nₛₒₗₗ zurückgesetzt. Zudem wird der Verzögerungsbaustein 87 aktiviert.

## Patentansprüche

1. Verfahren zum Betreiben einer über einen Elektromotor (57) ansteuerbaren Förderpumpe (53 59) in einem Hydraulikkreis (N, H), die bei einer Fluid-Normalversorgung das Fluid aus einem Fluidsumpf (55) ansaugt, in den das im Hydraulikkreis (N, H) umgewälzte Fluid rückführbar ist, und die bei einer Fluid-Unterversorgung zumindest teilweise Luft ansaugt, wobei der Elektromotor (57) in einem Regelkreis (R) eingebunden ist, der eine Regeleinheit (39) aufweist, die auf der Grundlage einer Ist-Drehzahl (nᵢₛₜ) und einer Soll-Drehzahl (nₛₒₗₗ) den Elektromotor (57) mit einer Stell-Drehzahl (nₛₜₑₗₗ) ansteuert, **dadurch gekennzeichnet, dass** der Regeleinheit (39) eine Auswerteeinheit (79) zur Erkennung der Fluid-Unterversorgung zugeordnet ist, und dass die Auswerteeinheit (79) die Ist-Drehzahl (nᵢₛₜ) mit einer Referenz-Drehzahl (n_{max,N}) vergleicht, und zwar bei jeweils identischer Stromaufnahme (Iₘₐₓ), und dass die Auswerteeinheit (79) aus dem Vergleich ermittelt, ob eine Fluid-Unterversorgung vorliegt.

2. Verfahren nach Anspruch 1, **dadurch gekennzeichnet, dass** die Auswerteinheit (79) eine Füllstandmodelleinheit (81) aufweist, die Ereignisse erfasst, die einen Ist-Füllstand (FSᵢₛₜ) im Fluidsumpf (55) beeinflussen, etwa eine Fahrzeug-Abstellzeitdauer zur Initialisierung der Füllstandmodelleinheit (81), eine Betriebstemperatur oder eine Entnahme durch die Förderpumpe, und dass die Füllstandmodelleinheit (81) in Abhängigkeit davon einen zeitlichen Modell-Füllstandverlauf (FSₘ(t)) ermittelt, der den zeitlichen Ist-Füllstandverlauf (FSᵢₛₜ(t)) im Fluidsumpf (55) nachbildet.

3. Verfahren nach Anspruch 2, **dadurch gekennzeichnet, dass** die Erkennung der Fluid-Unterversorgung erst bei Erfüllung einer Prüfbedingung durchgeführt wird, wonach der zeitliche Modell-Füllstandverlauf (FSₘ(t)) größer oder gleich einem vordefinierten Prüf-Füllstand (FS_{prüf}) ist.

4. Verfahren nach Anspruch 1, 2 oder 3, **dadurch gekennzeichnet, dass** der Elektromotor (57) der Förderpumpe (53, 59) für einen Überlastschutz eine Strombegrenzung aufweist, mit der eine Ist-Stromaufnahme (Iᵢₛₜ) des Elektromotors (57) auf eine maximale Stromaufnahme (Iₘₐₓ) begrenzt ist, und dass sich bei einer Fluid-Normalversorgung ohne Luftansaugung bei maximaler Elektromotor-Stromaufnahme (Iₘₐₓ) eine maximale Normalversorgungs-Drehzahl (n_{max,N}) einstellt, und dass sich bei einer Fluid-Unterversorgung mit zumindest teilweiser Luftansaugung bei maximaler Elektromotor-Stromaufnahme (Iₘₐₓ) eine Drehzahl (nᵢₛₜ) einstellt, die größer ist als die maximale Normalversorgungs-Drehzahl (n_{max,N}).

5. Verfahren nach Anspruch 4, **dadurch gekennzeichnet, dass** zur Erkennung einer Fluid-Unterversorgung der Elektromotor (57) mit der maximalen Stromaufnahme (Iₘₐₓ) beaufschlagt wird, und dass in einer Vergleichereinheit (80) der Auswerteeinheit (79) die sich einstellende Ist-Drehzahl (nᵢₛₜ) mit der, mit der maximalen Stromaufnahme (Iₘₐₓ) korrelierenden maximalen Normalversorgungs-Drehzahl (n_{max,N}) verglichen wird, und dass bei Vorliegen einer Ist-Drehzahl (nᵢₛₜ), die größer als die maximalen Normalversorgungs-Drehzahl (n_{max,N}) ist, die Auswerteeinheit (79) eine Fluid-Unterversorgung erkennt.

6. Verfahren nach Anspruch 5, **dadurch gekennzeichnet, dass** der Vergleichereinheit (80) eine Drehzahlkonstanz-Einheit (83) zugeordnet ist, mittels der erfasst wird, ob der Elektromotor (57) bei konstanter Ist-Drehzahl (nᵢₛₜ) läuft, und dass erst bei Vorliegen einer konstanten Ist-Drehzahl (nᵢₛₜ) in der Vergleichereinheit (80) der Vergleich zwischen der Ist-Drehzahl (nᵢₛₜ) und der maximalen Normalversorgungs-Drehzahl (n_{max,N}) erfolgt.

7. Verfahren nach Anspruch 5 oder 6, **dadurch gekennzeichnet, dass** die sich bei einer Fluid-Normalversorgung ohne Luftansaugung bei maximaler Elektromotor-Stromaufnahme (Iₘₐₓ) einstellende maximale Normalversorgungs-Drehzahl (n_{max,N}) empirisch ermittelt wird, und dass die maximale Stromaufnahme (Iₘₐₓ) und die damit korrelierende maximale Normalversorgungs-Drehzahl (n_{max,N}) als ein Wertepaar in der Auswerteeinheit (79) hinterlegt ist, und dass insbesondere mehrere solcher Wertepaare hinterlegt sind, die jeweils unterschiedlichen Betriebstemperaturen (T_{B}) zugeordnet sind.

8. Verfahren nach Anspruch 5, 6 oder 7, **dadurch gekennzeichnet, dass** zur Beaufschlagung des Elektromotors (57) mit der maximalen Stromaufnahme (Iₘₐₓ) die Solldrehzahl (nₛₒₗₗ) auf eine Prüfdrehzahl (n_{prüf}) gesetzt wird, die größer ist als eine Drehzahl, die von dem Regelkreis (R) bei maximaler Stromaufnahme (Iₘₐₓ) darstellbar ist.

9. Verfahren nach einem der vorhergehenden Ansprüche, **dadurch gekennzeichnet, dass** nach erfolgter Prüfung auf Fluid-Unterversorgung die Drehzahlanforderung von der Prüf-Drehzahl (n_{prüf}) wieder auf die Soll-Drehzahl (nₛₒₗₗ) zurückgesetzt wird, und/oder die Auswerteeinheit (79) deaktiviert wird.

## Claims

1. Method for operating a feed pump (53 59), which can be actuated by means of an electric motor (57), in a hydraulic circuit (N, H), which, in the case of a normal supply of fluid, sucks in the fluid from a fluid sump (55) into which the fluid which is circulated in the hydraulic circuit (N, H) can be fed back, and which at least partially sucks in air in the case of a fluid undersupply, wherein the electric motor (57) is integrated into a control circuit (R) which has a control unit (39) which actuates the electric motor (57) with an actuation rotational speed (nₛₜₑₗₗ) on the basis of an actual rotational speed (nᵢₛₜ) and a setpoint rotational speed (nₛₒₗₗ), **characterised in that** an evaluation unit (79) for detecting the fluid undersupply is assigned to the control unit (39), and that the evaluation unit (79) compares the actual rotational speed (nᵢₛₜ) with a reference rotational speed (n_{max,N}), specifically in the case of respectively identical current drain (Iₘₐₓ), and that on the basis of the comparison, the evaluation unit (79) determines whether a fluid undersupply is present.

2. Method according to claim 1, **characterised in that** the evaluation unit (79) has a filling state model unit (81), which detects events influencing an actual filling state (FSᵢₛₜ) in the fluid sump (55), such as a time period during which a vehicle is turned off for initialising the filling state model unit (81), an operating temperature or a removal by the feed pump, and that the filling state model unit (81) determines as a function thereof a temporal model filling state profile (FSₘ(t)), which replicates the temporal actual filling state profile (FSᵢₛₜ(t)) in the fluid sump (55).

3. Method according to claim 2, **characterised in that** the detection of the fluid undersupply is not carried out until a test condition has been fulfilled, according to which the temporal model filling state profile (FSₘ(t)) is greater than or equal to a predefined test filling state (FS_{prüf}).

4. Method according to claim 1, 2 or 3, **characterised in that** the electric motor (57) of the feed pump (53, 59) has a current limit for overload protection, with which an actual current drain (Iᵢₛₜ) of the electric motor (57) is limited to a maximum current drain (Iₘₐₓ), and that a maximum normal supply rotational speed (n_{max,N}) is set with a normal fluid supply without the intake of air at a maximum electromotor current drain (Iₘₐₓ), and that during a fluid undersupply with at least a partial air intake at maximum electric motor current drain (Iₘₐₓ) a rotational speed (nᵢₛₜ) is set, which is greater than the maximum normal supply rotational speed (n_{max,N}).

5. Method according to claim 4, **characterised in that** for detection of a fluid undersupply the electric motor (57) is impacted with the maximum current drain (Iₘₐₓ), and that the actual rotational speed being set (nᵢₛₜ) is compared in a comparison unit (80) of the evaluation unit (79) with the maximum normal supply rotational speed (n_{max,N}) correlating with the maximum current drain (Iₘₐₓ), and that, if an actual rotational speed (nᵢₛₜ) is present which is greater than the maximum normal supply rotational speed (n_{max,N}), the evaluation unit (79) detects a fluid undersupply.

6. Method according to claim 5, **characterised in that** there is assigned to the comparison unit (80) a rotational speed constant unit (83), by means of which it is detected, whether the electric motor (57) is running at constant actual rotational speed (nᵢₛₜ), and that the comparison between the actual rotational speed (nᵢₛₜ) and the maximum normal supply rotational speed (n_{max,N}) is carried out only if a constant actual rotational speed (nᵢₛₜ) is present in the comparison unit (80).

7. Method according to claim 5 or 6, **characterised in that** the maximum normal supply rotational speed (n_{max,N}) set with normal fluid supply without air intake at maximum current drain (Iₘₐₓ) of the electric motor is determined empirically, and that the maximum current drain (Iₘₐₓ) and the maximum normal supply rotational speed (n_{max,N}) correlating therewith are stored as a pair of values in the evaluation unit (79), and that in particular multiple such value pairs are stored, which are assigned respectively to different operating temperatures (T_{B}).

8. Method according to claim 5, 6 or 7, **characterised in that** for impacting of the electric motor (57) with the maximum current drain (Iₘₐₓ) the setpoint rotational speed (nₛₒₗₗ) is set to a test rotational speed (n_{prüf}), which is greater than a rotational speed which can be represented by the control circuit (R) at maximum current drain (Iₘₐₓ).

9. Method according to any one of the preceding claims, **characterised in that** after checking for fluid undersupply the rotational speed requirement is reset again from the test rotational speed (n_{prüf}) to the setpoint rotational speed (nₛₒₗₗ) and/or the evaluation unit (79) is deactivated.

## Revendications

1. Procédé permettant de faire fonctionner une pompe d'alimentation (53 59) pouvant être commandée par l'intermédiaire d'un moteur électrique (57) dans un circuit hydraulique (N, H), qui, lors d'une alimentation en fluide normale, aspire le fluide d'un carter de fluide (55), dans lequel le fluide mis en circulation dans le circuit hydraulique (N, H) peut être ramené, et qui, lors d'une sous-alimentation en fluide, aspire au moins en partie l'air, dans lequel le moteur électrique (57) est intégré dans un circuit de régulation (R), qui présente une unité de régulation (39), qui commande le moteur électrique (57) avec une vitesse de rotation de réglage (nₛₜₑₗₗ) sur la base d'une vitesse de rotation réelle (nᵢₛₜ) et d'une vitesse de rotation théorique (nₛₒₗₗ), **caractérisé en ce qu'**une unité d'évaluation (79) destinée à identifier la sous-alimentation en fluide est associée à l'unité de régulation (39), et que l'unité d'évaluation (79) compare la vitesse de rotation réelle (nᵢₛₜ) à une vitesse de rotation de référence (n_{max,N}), et ce pour une intensité absorbée (Iₘₐₓ) respectivement identique, et que l'unité d'évaluation (79) détermine à partir de la comparaison si une sous-alimentation en fluide est présente.

2. Procédé selon la revendication 1, **caractérisé en ce que** l'unité d'évaluation (79) présente une unité de modèle de niveau de remplissage (81), qui détecte des incidents qui influencent un état de remplissage réel (FSᵢₛₜ) dans le carter de fluide (55), par exemple une durée de temps d'arrêt de véhicule pour initialiser l'unité de modèle de niveau de remplissage (81), une température de fonctionnement ou un prélèvement par la pompe d'alimentation, et que l'unité de modèle de niveau de remplissage (81) détermine en fonction de cela une variation temporelle de niveau de remplissage de modèle (FSₘ(t)), qui reproduit la variation temporelle de niveau de remplissage réel (FSᵢₛₜ(t)) dans le carter de fluide (55).

3. Procédé selon la revendication 2, **caractérisé en ce que** l'identification de la sous-alimentation en fluide n'est réalisée que lorsqu'une condition de contrôle est satisfaite, selon laquelle la variation temporelle de niveau de remplissage de modèle (FSₘ(t)) est supérieure ou égale à un niveau de remplissage de contrôle (FS_{prüf}) prédéfini.

4. Procédé selon la revendication 1, 2 ou 3, **caractérisé en ce que** le moteur électrique (57) de la pompe d'alimentation (53, 59) présente, pour une protection contre une surcharge, une limitation de courant, avec laquelle une intensité absorbée réelle (Iᵢₛₜ) du moteur électrique (57) est limitée à une intensité absorbée maximale (Iₘₐₓ), et que, pour une alimentation en fluide normale sans aspiration d'air pour une intensité absorbée maximale de moteur électrique (Iₘₐₓ), une vitesse de rotation d'alimentation normale maximale (n_{max,N}) est obtenue, et que pour une sous-alimentation en fluide avec aspiration d'air au moins partielle pour une intensité absorbée de moteur électrique maximale (Iₘₐₓ), une vitesse de rotation (nᵢₛₜ) est obtenue, qui est supérieure à la vitesse de rotation d'alimentation normale maximale (n_{max,N}).

5. Procédé selon la revendication 4, **caractérisé en ce que**, pour l'identification d'une sous-alimentation en fluide, le moteur électrique (57) est soumis à l'effet de l'intensité absorbée maximale (Iₘₐₓ), et que la vitesse de rotation réelle (nᵢₛₜ) obtenue est comparée à la vitesse de rotation d'alimentation normale maximale (n_{max,N}) en corrélation avec l'intensité absorbée maximale (Iₘₐₓ) dans une unité de comparaison (80) de l'unité d'évaluation (79), et que, en présence d'une vitesse de rotation réelle (nᵢₛₜ), qui est supérieure à la vitesse de rotation d'alimentation normale maximale (n_{max,N}), l'unité d'évaluation (79) détecte une sous-alimentation en fluide.

6. Procédé selon la revendication 5, **caractérisé en ce qu'**une unité de stabilité de vitesse de rotation (83), au moyen de laquelle il est détecté si le moteur électrique (57) fonctionne à vitesse de rotation réelle (nᵢₛₜ) constante, est associée à l'unité de comparaison (80), et que ce n'est qu'en présence d'une vitesse de rotation réelle (nᵢₛₜ) constante que la comparaison entre la vitesse de rotation réelle (nᵢₛₜ) et la vitesse de rotation d'alimentation normale maximale (n_{max,N}) s'effectue dans l'unité de comparaison (80).

7. Procédé selon la revendication 5 ou 6, **caractérisé en ce que** la vitesse de rotation d'alimentation normale maximale (n_{max,N}) obtenue dans le cas d'une alimentation normale en fluide sans aspiration d'air pour une intensité absorbée de moteur électrique maximale (Iₘₐₓ) est déterminée de manière empirique, et que l'intensité absorbée maximale (Iₘₐₓ) et la vitesse de rotation d'alimentation normale maximale (n_{max,N}) en corrélation avec celle-ci sont mises en mémoire en tant que paire de valeurs dans l'unité d'évaluation (79), et qu'en particulier plusieurs telles paires de valeurs sont mises en mémoire, qui sont associées à respectivement différentes températures de fonctionnement (T_{B}).

8. Procédé selon la revendication 5, 6 ou 7, **caractérisé en ce que**, pour soumettre le moteur électrique (57) à l'effet de l'intensité absorbée maximale (Iₘₐₓ), la vitesse de rotation théorique (nₛₒₗₗ) est réglée sur une vitesse de rotation de contrôle (n_{prüf}) qui est supérieure à une vitesse de rotation qui peut être représentée par le circuit de régulation (R) pour l'intensité absorbée maximale (Iₘₐₓ).

9. Procédé selon l'une quelconque des revendications précédentes, **caractérisé en ce que**, une fois le contrôle de sous-alimentation en fluide effectué, la demande de vitesse de rotation est ramenée de la vitesse de rotation de contrôle (n_{prüf}) à la vitesse de rotation théorique (nₛₒₗₗ), et/ou l'unité d'évaluation (79) est désactivée.
